# FASCICULE DE BREVET EUROPEEN

(11) **EP 3 105 026 B1**
(45) Date de publication et mention de la délivrance du brevet: **25.03.2020**
(21) Numéro de dépôt: 15709242.0
(22) Date de dépôt: 11.02.2015
(51) Int. Cl.: B29B 15/12, B29C 70/50, B29K 101/12

(54) **PROCEDE DE FABRICATION D'UN MATERIAU FIBREUX PRE-IMPREGNE DE POLYMERE THERMOPLASTIQUE EN UTILISANT UNE DISPERSION AQUEUSE DE POLYMERE**
VERFAHREN ZUR HERSTELLUNG EINES MIT THERMOPLASTISCHEM POLYMER VORIMPRÄGNIERTEN FASERMATERIALS UNTER VERWENDUNG EINER WÄSSRIGEN POLYMERDISPERSION
METHOD OF MANUFACTURING A FIBROUS MATERIAL PREIMPREGNATED WITH THERMOPLASTIC POLYMER USING AN AQUEOUS DISPERSION OF POLYMER

(30) Priorité: 13.02.2014 FR 1451138
(43) Date de publication de la demande: 21.12.2016
(73) Titulaire: Arkema France, 92700 Colombes (FR)
(72) Inventeur: GAILLARD, Patrice, F-64370 Hagetaubin (FR); HOCHSTETTER, Gilles, F-94240 L'Hay les Roses (FR); SAVART, Thibaut, 64230 Sauvagnon (FR)
(74) Mandataire: A.P.I. Conseil
(86) Numéro de dépôt international: PCT/FR2015/050332
(87) Numéro de publication internationale: WO 2015/121584

(56) Documents cités:
- WO-A2-2008/051756
- FR-A1- 2 967 371
- FR-A1- 2 973 802
- "DICKENMESS- UND REGELSYSTEM FUER KALANDER", KUNSTOFFE, CARL HANSER VERLAG, MUNCHEN, DE, vol. 76, no. 5, 1 mai 1986 (1986-05-01), page 420, XP001050689, ISSN: 0023-5563
- MILLER A ET AL: "IMPREGNATION TECHNIQUES FOR THERMOPLASTIC MATRIX COMPOSITES", POLYMERS AND POLYMER COMPOSITES, RAPRA TECHNOLOGY, vol. 4, no. 7, 1 janvier 1996 (1996-01-01) , pages 459-481, XP000658227, ISSN: 0967-3911

## Description

### [Domaine de l'invention]

La présente invention concerne un procédé de fabrication d'un matériau fibreux pré-imprégné de polymère thermoplastique.

Plus particulièrement, l'invention se rapporte à un procédé de fabrication d'un matériau fibreux pré-imprégné comprenant une étape d'imprégnation suivie d'une étape de mise en forme pour l'obtention de rubans de matériau fibreux pré-imprégné, de dimensions calibrées, directement utilisables pour la fabrication de pièces composites tridimensionnelles.

Dans la présente description, on entend par « matériau fibreux » un assemblage de fibres de renfort. Avant sa mise en forme, il se présente sous forme de mèches. Après sa mise en forme, il se présente sous forme de bandes, ou de nappes, ou de morceaux. Lorsque les fibres de renfort sont continues, leur assemblage constitue un tissu. Lorsque les fibres sont courtes, leur assemblage constitue un feutre ou un non tissé.

Les fibres pouvant entrer dans la composition du matériau fibreux sont plus spécialement des fibres de carbone, des fibres de verre, des fibres de basalte, des fibres de carbure de silicium, des fibres à base de polymères, des fibres végétales, ou des fibres cellulosiques utilisées seules ou en mélange.

De tels matériaux fibreux pré-imprégnés sont notamment destinés à la réalisation de matériaux composites légers pour la fabrication de pièces mécaniques ayant une structure à trois dimensions et possédant des propriétés de bonne résistance mécanique, thermique et capables d'évacuer des charges électrostatiques, c'est-à-dire des propriétés compatibles avec la fabrication de pièces notamment dans les domaines de la mécanique, de l'aéronautique et nautique, de l'automobile, de l'énergie, de la santé et du médical, de l'armée et de l'armement, des sports et loisirs, et de l'électronique.

De tels matériaux fibreux pré-imprégnés sont également appelés matériaux composites. Ils comprennent le matériau fibreux, constitué des fibres de renfort, et d'une matrice constituée par le polymère d'imprégnation. Le premier rôle de cette matrice est de maintenir les fibres de renfort dans une forme compacte et de donner la forme voulue au produit final. Une telle matrice sert entre autres à protéger les fibres de renfort contre l'abrasion et un environnement agressif, à contrôler l'aspect de surface et à disperser d'éventuelles charges entre les fibres. Le rôle de cette matrice est important pour la tenue à long terme du matériau composite, notamment en ce qui concerne la fatigue et le fluage.

### [Art antérieur]

Une bonne qualité des pièces composites tridimensionnelles fabriquées à partir de matériaux fibreux pré-imprégnés passe par conséquent par une maîtrise d'une part du procédé d'imprégnation des fibres de renfort par le polymère thermoplastique et d'autre part du procédé de mise en forme du matériau fibreux pré-imprégné sous forme de produit semi-fini.

Dans la présente description, on utilise le terme « bande » pour désigner des bandes de matériau fibreux dont la largeur est supérieure ou égale à 100mm. On utilise le terme « ruban » pour désigner des rubans de largeur calibrée et inférieure ou égale à 100mm.

Jusqu'à présent, la fabrication de bandes de matériaux fibreux renforcées par imprégnation de polymère thermoplastique ou de polymère thermodurcissable s'effectuait suivant plusieurs procédés qui dépendent notamment de la nature du polymère, du type de matériau composite final souhaité et de son domaine d'applications. Les technologies de dépôt de poudre ou d'extrusion de polymère fondu sont utilisées pour imprégner les fibres de renfort par des polymères thermodurcissables, comme les résines époxy par exemple, tel que décrit dans le brevet WO2012/066241A2. Ces technologies ne sont généralement pas applicables directement à l'imprégnation par des polymères thermoplastiques, en particulier ceux à haute température de fusion qui ont une viscosité à l'état fondu trop importante pour obtenir une imprégnation satisfaisante des fibres et des produits semi-finis ou finis de bonne qualité.

Des sociétés commercialisent des bandes de matériaux fibreux obtenues par une méthode d'imprégnation de fibres unidirectionnelles par passage des fibres, en continu, dans un bain fondu de polymère thermoplastique contenant un solvant organique tel que la benzophénone. On peut par exemple se référer au document US 4 541 884 de l'Impérial Chemical Industries. La présence du solvant organique permet notamment d'adapter la viscosité du mélange fondu et d'assurer une bonne enduction des fibres. Les fibres ainsi pré-imprégnées sont ensuite mises en forme. Elles peuvent par exemple être découpées en bandes de différentes largeurs puis disposées sous une presse, puis chauffées à une température supérieure à la température de fusion du polymère pour assurer la cohésion du matériau et notamment l'adhérence du polymère sur les fibres. Cette méthode d'imprégnation et de mise en forme permet de réaliser des pièces de structure à haute tenue mécanique.

Un des inconvénients de cette technique réside dans la température de chauffe nécessaire à l'obtention de ces matériaux. La température de fusion des polymères dépend notamment de leur nature chimique. Elle peut être relativement élevée pour des polymères de type poly(méthacrylate de méthyle) (PMMA), voire très élevée pour des polymères de type poly(sulfure de phénylène) (PPS), poly(éther éther cétone) (PEEK) ou poly(éther cétone cétone) (PEKK) par exemple. La température de chauffe peut donc monter à des températures supérieures à 250°C, et même supérieures à 350°C, températures qui sont très supérieures à la température d'ébullition et au point éclair du solvant, qui sont respectivement de 305°C et 150°C pour la benzophénone. Dans ce cas, on assiste à un départ brusque du solvant induisant une forte porosité au sein des fibres et provoquant par conséquent l'apparition de défauts dans le matériau composite. Le procédé est donc difficilement reproductible et implique des risques d'explosion mettant en danger les opérateurs. Enfin, l'utilisation de solvants organiques est à éviter pour des raisons environnementales et d'hygiène et sécurité des opérateurs.

Le document EP 0 406 067, déposé aux noms conjoints d'Atochem et de l'Etat Français, ainsi que le document EP0 201 367 décrivent quant à eux une technique d'imprégnation sur lit fluidisé de poudre de polymère. Les fibres pénètrent dans une cuve de fluidisation fermée où elles sont éventuellement séparées les unes des autres au moyen de galets ou de cylindres cannelés, les fibres se chargeant électrostatiquement, par frottement au contact de ces galets ou cylindres. Cette charge électrostatique permet à la poudre de polymère de se coller en surface des fibres et ainsi de les imprégner.

Un autre procédé connu d'imprégnation est le passage en continu des fibres dans une dispersion aqueuse de poudre polymérique.. On peut par exemple se référer au document EP0324680. On utilise dans ce procédé une dispersion de poudres de taille micrométrique (environ 20 µm). Après trempage dans la solution aqueuse, les fibres sont imprégnées par la poudre polymérique. Le procédé implique alors une étape de séchage consistant à faire passer les fibres imprégnées dans un premier four afin d'évaporer l'eau absorbée pendant le trempage. Une étape de traitement thermique, consistant à faire passer les fibres imprégnées et séchées dans une seconde zone de chauffage, à haute température, est ensuite nécessaire pour fondre le polymère afin qu'il adhère, se répartisse et recouvre les fibres.

Le principal inconvénient de cette méthode est l'homogénéité du dépôt qui est souvent imparfaite. Un autre problème lié à ce procédé est la forte porosité induite par la mauvaise répartition du polymère au sein des fibres, qui peut persister après l'étape de traitement thermique, entrainant par conséquent l'apparition d'un grand nombre de défauts dans le matériau fibreux pré-imprégné. Le matériau fibreux pré-imprégné nécessite ensuite d'être mis en forme sous forme de rubans par exemple. La technique de mise en forme peut en outre altérer encore le matériau et le fragiliser encore plus du fait de la présence de ces défauts.

Le document FR2973802 décrit un procédé de fabrication d'un matériau composite à base de fibres et d'un polymère de chlorure de vinyle. Le procédé consiste dans un premier temps à plonger les fibres dans un bain d'hydrosol constitué d'une dispersion aqueuse de polychlorure de vinyle. Les fibres imprégnées sont ensuite séchées pour éliminer l'eau, puis l'hydrosol est gélifié pour passer d'une phase hétérogène à une phase homogène, sous l'action de la chaleur. Ce document ne divulgue pas le fait d'imprégner plusieurs mèches de fibres parallèles en simultané dans une dispersion aqueuse et de les mettre en forme de rubans parallèles unidirectionnels au moyen d'une calandre chauffante à gorges multiples.

Le document WO2008/051756 décrit quant à lui une dispersion aqueuse de poudre de polymère thermoplastique utilisée pour imprégner des brins de fibres. Une fois imprégnées les fibres sont séchées pour éliminer l'eau puis elles sont transformées en granulés ou paillettes. Ce document ne divulgue pas non plus le fait d'imprégner plusieurs mèches de fibres parallèles en simultané dans une dispersion aqueuse et de les mettre en forme de rubans parallèles unidirectionnels au moyen d'une calandre chauffante à gorges multiples.
Enfin, le document FR2 967 371 décrit un procédé de fabrication d'un matériau fibreux comprenant un assemblage d'une ou plusieurs fibres imprégné par un polymère thermodurcissable ou un mélange de polymères thermodurcissables contenant un durcisseur et des nanocharges d'origine carbonique. L'imprégnation consiste à utiliser 2 séries de fibres différentes, une première série formant les fibres de renfort et une deuxième série de fibres de polymère thermodurcissable contenant le mélange nanocharges/durcisseur, à disposer les 2 séries de fibres au contact l'une de l'autre puis à chauffer à une température supérieure à la température de fusion des fibres de polymère thermodurcissable. Dans ce cas, un dispositif de calandrage est prévu pour permettre l'obtention, par pression, d'une bande calibrée en largeur. Ce document ne prévoit pas une imprégnation de plusieurs mèches de fibres simultanément dans un bain contenant une dispersion aqueuse de polymère thermoplastique suivi d'une mise en forme par calandrage pour l'obtention de plusieurs rubans parallèles unidirectionnels, de largeur et d'épaisseur calibrées. L'obtention d'une bande calibrée nécessite, dans ce cas, une étape ultérieure de refendage, ce que l'invention cherche justement à éviter.

Concernant la mise en forme des matériaux fibreux pré-imprégnés sous forme de rubans calibrés, adaptés à la fabrication de pièces composites tridimensionnelles par dépose automatique au moyen d'un robot, celle-ci est en général réalisée en post-traitement.

La qualité des rubans de matériau fibreux pré-imprégné, et donc la qualité du matériau composite final, dépend non seulement de l'homogénéité de l'imprégnation des fibres et donc du contrôle et de la reproductibilité de la porosité du matériau fibreux pré-imprégné, mais également de la dimension et plus particulièrement de la largeur et de l'épaisseur des rubans. Une régularité et un contrôle de ces deux paramètres dimensionnels permettent en effet d'améliorer la tenue mécanique des matériaux.

Actuellement, quel que soit le procédé utilisé pour l'imprégnation des matériaux fibreux, la fabrication de rubans de faible largeur, c'est-à-dire de largeur inférieure à 100mm, nécessite généralement une refente (c'est-à-dire une découpe) de bandes de largeur supérieure à 500 mm, encore dénommées nappes. Les rubans ainsi dimensionnés sont ensuite repris pour être déposés par un robot à l'aide d'une tête.

En outre, les rouleaux de nappes ne dépassant pas une longueur de l'ordre de 1 km, les rubans obtenus après découpe ne sont en général pas suffisamment longs pour fabriquer certains matériaux de taille importante lors de la dépose par robot. Les rubans doivent donc être raboutés pour obtenir une longueur plus importante, créant alors des surépaisseurs. Ces surépaisseurs entrainent l'apparition d'hétérogénéités qui sont préjudiciables à l'obtention de matériaux composites de bonne qualité.

Les techniques actuelles d'imprégnation de matériaux fibreux et de mise en forme de tels matériaux fibreux pré-imprégnés sous forme de rubans calibrés présentent donc plusieurs inconvénients. Il est par exemple difficile de chauffer de manière homogène un mélange fondu de polymères thermoplastiques dans une filière et en sortie de filière, jusqu'au cœur du matériau, ce qui altère la qualité de l'imprégnation. De plus, la différence de température existante entre les fibres et un mélange fondu de polymères au niveau de la filière d'imprégnation altère également la qualité et l'homogénéité de l'imprégnation. L'utilisation de solvants organiques implique généralement l'apparition de défauts dans le matériau ainsi que des risques environnementaux et de sécurité. La mise en forme, par post-traitement à haute température du matériau fibreux pré-imprégné sous forme de bandes, reste difficile car elle ne permet pas toujours une répartition homogène du polymère au sein des fibres ce qui entraine l'obtention d'un matériau de moindre qualité. Le refendage de nappes pour l'obtention de rubans calibrés et le raboutage de ces rubans induit un coût supplémentaire de fabrication. Le refendage génère en outre des problèmes importants de poussières qui polluent les rubans de matériaux fibreux pré-imprégnés utilisés pour la dépose robot et peuvent entrainer des dysfonctionnements des robots et/ou des imperfections sur les composites. Ceci entraine potentiellement des coûts de réparation des robots, un arrêt de la production et la mise au rebut des produits non conformes. Enfin, lors de l'étape de refendage, une quantité non négligeable de fibres est détériorée, induisant une perte de propriétés, et notamment une réduction de la résistance mécanique et de la conductivité, des rubans de matériau fibreux pré-imprégné.

### [Problème technique]

L'invention a donc pour but de remédier à au moins un des inconvénients de l'art antérieur. L'invention vise notamment à proposer un procédé de fabrication d'un matériau fibreux pré-imprégné, associant une technique d'imprégnation et une technique de mise en forme en continu, afin d'éviter toute étape de post-traitement du matériau fibreux, et d'obtenir un matériau fibreux pré-imprégné présentant une imprégnation homogène des fibres et des dimensions contrôlées avec une porosité contrôlée et reproductible dont dépendent les performances de la pièce composite finale.

### [Brève description de l'inventionl

A cet effet, l'invention a pour objet un procédé de fabrication d'un matériau fibreux pré-imprégné comprenant un matériau fibreux en fibres continues et une matrice polymère thermoplastique, caractérisé en ce que ledit matériau fibreux pré-imprégné est réalisé en un ruban unique unidirectionnel ou en une pluralité de rubans parallèles unidirectionnels et en ce que ledit procédé comprend les étapes suivantes :
i. une étape d'imprégnation dudit matériau fibreux se présentant sous forme d'une mèche ou de plusieurs mèches parallèles, ladite étape d'imprégnation comprenant :
   ia) l'immersion dudit matériau fibreux dans un bain contenant une dispersion aqueuse dudit polymère thermoplastique, ladite immersion étant suivie par
   ib) un séchage dudit matériau fibreux, puis
ii. une étape de mise en forme de ladite mèche ou desdites mèches parallèles dudit matériau fibreux imprégné selon l'étape i), par calandrage au moyen d'au moins une calandre chauffante sous forme de ruban unique unidirectionnel ou d'une pluralité de rubans parallèles unidirectionnels avec, dans ce dernier cas, ladite calandre chauffante comportant une pluralité de gorges de calandrage, de préférence jusqu'à 200 gorges de calandrage, en conformité avec le nombre desdits rubans et avec une pression et/ou un écartement entre les rouleaux de ladite calandre régulé par un système asservi.

Ainsi, le calandrage à chaud de la ou des mèches pré-imprégnées, juste en aval du dispositif d'imprégnation en continu, par immersion dans un bain contenant une dispersion aqueuse de polymère, permet d'homogénéiser la répartition du polymère et l'imprégnation des fibres, de contrôler et réduire le taux de porosités au sein du matériau fibreux pré-imprégné, et d'obtenir un ou plusieurs rubans de grande longueur et de largeur et d'épaisseur calibrées. Le procédé selon l'invention permet donc d'éviter l'utilisation de polymère fondu, de viscosité trop importante, l'utilisation préjudiciable de solvants organiques, et il permet également de mettre en forme des rubans de dimensions calibrées sans avoir recours à une étape de refendage et de raboutage.

Selon d'autres caractéristiques optionnelles du procédé :
- il comprend en outre une étape iii) de bobinage dudit ruban ou desdits rubans sur une ou plusieurs bobines, le nombre de bobines étant identique au nombre de rubans, une bobine étant affectée à chaque ruban,
- ladite étape d'imprégnation i) est complétée par une étape de recouvrement de ladite mèche unique ou de ladite pluralité de mèches parallèles après les étapes d'immersion ia) et séchage ib), par un polymère thermoplastique fondu, pouvant être le même ou différent dudit polymère thermoplastique de ladite dispersion aqueuse, ladite étape de recouvrement étant réalisée avant ladite étape de calandrage ii), ledit polymère fondu étant de préférence de même nature que ledit polymère de ladite dispersion aqueuse, de préférence avec ledit recouvrement s'effectuant par extrusion en tête d'équerre par rapport à ladite mèche unique ou à ladite pluralité de mèches parallèles,
- ledit polymère de ladite dispersion aqueuse est un polymère thermoplastique ou un mélange de polymères thermoplastiques,
- ledit polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges,
- le polymère thermoplastique ou mélange de polymères thermoplastiques comprend en outre des polymères à cristaux liquides ou du poly(butylène téréphtalate) cyclisé, ou des mélanges en contenant, comme additif,
- ledit polymère, ou mélange de polymères thermoplastiques, est sélectionné parmi des polymères amorphes dont la température de transition vitreuse est telle que Tg≥ 80°C et/ou parmi des polymères semi-cristallins dont la température de fusion Tf est ≥ 150°C,
- le polymère thermoplastique ou mélange de polymères thermoplastiques est sélectionné parmi : les polyaryl éther cétones (PAEK), en particulier le poly(éther éther cétone) (PEEK) ; les polyaryl éther cétone cétone (PAEKK), en particulier le poly(éther cétone cétone) (PEKK) ; les polyéther-imides (PEI) aromatiques ; les polyaryl sulfones, en particulier les polyphénylène sulfones (PPSU) ; les polyarylsulfures, en particulier les polyphénylène sulfures (PPS) ; les polyamides (PA), en particulier polyamides aromatiques éventuellement modifiées par unités urées ; les polyacrylates en particulier le polyméthacrylate de méthyle (PMMA) ; ou les polymères fluorés en particulier le polyfluorure de vinylidène (PVDF) ; et leurs mélanges,
- ledit matériau fibreux comprend des fibres continues sélectionnées parmi les fibres de carbone, de verre, de carbure de silicium, de basalte, de silice, les fibres naturelles en particulier de lin ou de chanvre, de sisal, de soie, ou cellulosiques en particulier de viscose, ou les fibres thermoplastiques de température de transition vitreuse Tg supérieure à la Tg dudit polymère ou dudit mélange de polymères lorsque ce-dernier est amorphe ou de température de fusion Tf supérieure à la Tf dudit polymère ou dudit mélange de polymères lorsque ce-dernier est semi-cristallin, ou un mélange de deux ou de plusieurs desdites fibres, de préférence un mélange de fibres de carbone, de verre ou de carbure de silicium, en particulier des fibres de carbone,
- le taux en volume dudit polymère ou mélange de polymères par rapport audit matériau fibreux varie de 40 à 250% de préférence de 45 à 125 % et plus préférentiellement de 45 à 80%,
- le taux en volume dudit polymère ou dudit mélange de polymères par rapport audit matériau fibreux varie de 0,2 et 15 %, de préférence entre 0,2 et 10% et plus préférentiellement de 0,2 et 5%,
- l'étape de calandrage ii) est réalisée au moyen d'une pluralité de calandres chauffantes,
- ladite (lesdites) calandre(s) chauffante(s) de l'étape ii) comprend (comprennent) un système de chauffage intégré par induction ou par microondes, de préférence par microondes, couplé à la présence de charges carbonées dans ledit polymère thermoplastique ou mélange de polymères thermoplastiques,
- ladite (lesdites) calandre(s) chauffante(s) de l'étape ii) est (sont) couplée(s) à un dispositif de chauffage complémentaire rapide, situé avant et/ou après ladite (chaque) calandre, en particulier un dispositif de chauffage par microondes ou induction couplé à la présence de charges carbonées dans ledit polymère ou dans ledit mélange de polymères, ou un dispositif de chauffage infrarouge IR, ou Laser ou par contact direct avec une autre source de chaleur comme une flamme.

L'invention se rapporte également à un ruban unidirectionnel de matériau fibreux pré-imprégné, en particulier ruban enroulé sur bobine, caractérisé en ce qu'il est obtenu par un procédé tel que défini ci-dessus.

Selon une caractéristique optionnelle, le ruban a une largeur et une épaisseur adaptées pour une dépose par robot dans la fabrication de pièces en trois dimensions, sans besoin de refendage, et de préférence a une largeur d'au moins 5 mm et pouvant aller jusqu'à 100mm, de préférence de 5 à 50 mm et de manière encore plus préférée de 5 à 10mm.

L'invention se rapporte aussi à une utilisation du procédé tel que défini ci-dessus pour la fabrication de rubans calibrés adaptés à la fabrication de pièces composites en trois dimensions par dépose automatique desdits rubans au moyen d'un robot.

L'invention porte en outre sur une utilisation du ruban tel que défini ci-dessus dans la fabrication de pièces composites en trois dimensions. Ladite fabrication desdites pièces composites concerne les domaines des transports, en particulier automobile, aéronautique civile ou militaire, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical, de la balistique avec pièces pour arme ou missile, de la sécurité et de l'électronique.

L'invention concerne également une pièce composite en trois dimensions, caractérisée en ce qu'elle résulte de l'utilisation d'au moins un ruban unidirectionnel de matériau fibreux pré-imprégné tel que défini ci-dessus.

L'invention porte enfin sur une unité de mise en œuvre du procédé de fabrication tel que défini ci-dessus, ladite unité étant caractérisée en ce qu'elle comprend :
a) un dispositif d'imprégnation en continu comprenant
   a1) une cuve d'immersion contenant ladite dispersion aqueuse dudit polymère, et
   a2) un dispositif de séchage de ladite mèche unique ou de ladite pluralité de mèches parallèles,
b) un dispositif de calandrage en continu de ladite mèche ou desdites mèches parallèles, avec mise en forme, sous forme d'un ruban unique ou sous forme de plusieurs rubans parallèles unidirectionnels, comprenant :
   b1) au moins une calandre chauffante, en particulier plusieurs calandres chauffantes en série, ladite calandre portant une gorge de calandrage ou plusieurs gorges de calandrage, et de préférence dans ce dernier cas ayant jusqu'à 200 gorges de calandrage,
   b2) un système de régulation de la pression et/ou de l'écartement entre rouleaux de calandrage.

Selon d'autres caractéristiques optionnelles de l'unité :
- elle comprend en outre un dispositif d'embobinage des rubans de matériau fibreux pré-imprégné, comportant un nombre de bobines identique au nombre de rubans, une bobine étant affectée à chaque ruban,
- ledit dispositif d'imprégnation a) comprend en plus et à la suite dudit dispositif de cuve d'immersion a1), et dudit dispositif de séchage a2), un dispositif a3) de recouvrement de ladite mèche unique ou de ladite pluralité de mèches parallèles imprégnées et séchées, par un polymère fondu, de préférence ledit dispositif de recouvrement a3) comprenant un dispositif d'extrusion en tête d'équerre par rapport à ladite mèche unique ou par rapport auxdites mèches parallèles,
- ladite (lesdites) calandre(s) chauffante(s) comprend (comprennent) un système de chauffage intégré par induction,
- ladite (lesdites) calandre(s) chauffante(s) est (sont) couplée(s) à un dispositif complémentaire de chauffage rapide, situé avant et/ou après ladite (chaque) calandre, ledit système de chauffage étant choisi parmi un dispositif à microondes ou d'induction en particulier lorsqu'il est couplé à la présence de charges carbonées, ou un système de chauffage IR, Laser ou un autre dispositif permettant un contact direct à la source de chaleur, tel qu'un dispositif à flamme,
- ledit dispositif de séchage, situé en sortie de ladite cuve d'immersion, est un dispositif de chauffage choisi parmi un dispositif à microondes ou par induction, en particulier lorsqu'il est couplé à la présence de charges carbonées, ou un système de chauffage infrarouge IR, ou par four à extraction de vapeur d'eau.

D'autres particularités et avantages de l'invention apparaitront à la lecture de la description faite à titre d'exemple illustratif et non limitatif, en référence aux Figures annexées, qui représentent :
- la Figure 1, un schéma d'une unité de mise en œuvre du procédé de fabrication d'un matériau fibreux pré-imprégné selon l'invention,
- la Figure 2, un schéma en coupe de deux rouleaux constitutifs d'une calandre telle qu'utilisée dans l'unité de la Figure 1.

### [Description détaillée de l'inventionl

Le terme « dispersion aqueuse » tel qu'utilisé se rapporte à toute dispersion de polymère en milieu aqueux, comprenant émulsion, suspension, y compris micro-suspension, de poudre de polymère(s) ou dispersion de particules de polymère formés in situ lors d'une polymérisation en milieu aqueux, par exemple par polymérisation en émulsion ou en suspension.

### Matrice polymère

On entend par thermoplastique, ou polymère thermoplastique, un matériau généralement solide à température ambiante, pouvant être cristallin, semi-cristallin ou amorphe, et qui se ramollit lors d'une augmentation de température, en particulier après passage de sa température de transition vitreuse (Tg) s'il est amorphe et s'écoule à plus haute température et pouvant observer une fusion franche au passage de sa température dite de fusion (Tf) (lorsqu'il est cristallin ou semi-cristallin), et qui redevient solide lors d'une diminution de température en dessous de sa température de fusion et en dessous de sa température de transition vitreuse.

Concernant le polymère de constitution de la matrice d'imprégnation du matériau fibreux, c'est avantageusement un polymère thermoplastique ou un mélange de polymères thermoplastiques. Ce polymère ou mélange de polymères thermoplastiques est broyé sous forme de poudre, afin de pouvoir l'utiliser dans une dispersion aqueuse. Les particules de poudre présentent un diamètre moyen de préférence inférieur à 125µm, afin de pouvoir pénétrer la ou les mèches de fibres.

De manière facultative, le polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent d'améliorer la lubrification de la matrice polymère lorsqu'elle est chauffée.

Selon une autre variante, le polymère thermoplastique ou mélange de polymères thermoplastiques peut en outre comprendre des additifs, tels que des polymères à cristaux liquides ou du poly(butylène téréphtalate) cyclisé, ou des mélanges en contenant, comme la résine CBT100 commercialisée par la société CYCLICS CORPORATION. Ces additifs permettent notamment de fluidifier la matrice polymère à l'état fondu, pour une meilleure pénétration au cœur des fibres. Selon la nature du polymère, ou mélange de polymères thermoplastiques, utilisé pour réaliser la matrice d'imprégnation, notamment sa température de fusion, on choisira l'un ou l'autre de ces additifs.

De manière avantageuse, le polymère thermoplastique ou mélange de polymères thermoplastique est sélectionné parmi des polymères amorphes dont la température de transition vitreuse est telle que Tg≥ 80°C et/ou parmi des polymères semi-cristallins dont la température de fusion Tf est ≥ 150°C.

Plus particulièrement, les polymères thermoplastiques entrant dans la constitution de la matrice d'imprégnation du matériau fibreux, peuvent être choisis parmi :
- les polymères et copolymères de la famille des polyamides (PA), tels que le le polyamide haute densité, le polyamide 6 (PA-6), le polyamide 11 (PA-11), le polyamide 12 (PA-12), le polyamide 6.6 (PA-6.6), le polyamide 4.6 (PA-4.6), le polyamide 6.10 (PA-6.10), le polyamide 6.12 (PA-6.12), les polyamides aromatiques, éventuellement modifié par des unités urées, en particulier les polyphtalamides et l'aramide, et les copolymères blocs, notamment polyamide/polyéther,
- les polyurées, en particulier aromatiques,
- les polymères et copolymères de la famille des acryliques comme les polyacrylates, et plus particulièrement le polyméthacrylate de méthyle (PMMA) ou ses dérivés,
- les polymères et copolymères de la famille des polyaryléther cétones (PAEK) comme le poly(éther éther cétone) (PEEK), ou les polyaryléther cétones cétones (PAEKK) comme le poly(éther cétone cétone) (PEKK) ou leurs dérivés,
- les polyéther-imides (PEI) aromatiques,
- les polyarylsulfures, en particulier les polyphénylène sulfures (PPS),
- les polyarylsulfones, en particulier les polyphénylène sulfones (PPSU),
- les polyoléfines, en particulier le polypropylène (PP);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE),
- et leurs mélanges.

De préférence les polymères de constitution de la matrice sont choisis parmi les polymères thermoplastiques présentant une température de fusion Tf élevée, à savoir à partir de 150°C et plus, comme les Polyamides (PA), en particulier les polyamides aromatiques éventuellement modifiés par des motifs urées, et leur copolymères, le Polyméthacrylate de méthyle (PPMA) et ses copolymères, les Polyether imides (PEI), le Poly(sulfure de phénylène) (PPS), le Poly(sulfone de phénylène) (PPSU), le Polyethercétonecétone (PEKK), le Polyetherethercétone (PEEK), les polymères fluorés comme le poly(fluorure de vinylidène) (PVDF).

Pour les polymères fluorés, on peut utiliser un homopolymère du fluorure de vinylidène (VDF de formule CH₂=CF₂) ou un copolymère du VDF comprenant en poids au moins 50% en masse de VDF et au moins un autre monomère copolymérisable avec le VDF. La teneur en VDF doit être supérieure à 80% en masse, voire mieux 90% en masse, pour assurer une bonne résistance mécanique à la pièce de structure, surtout lorsqu'elle est soumise à des contraintes thermiques. Le comonomère peut être un monomère fluoré tel que par exemple le fluorure de vinyle.

Pour des pièces de structure devant résister à des températures élevées, outre les polymères fluorés, on utilise avantageusement selon l'invention les PAEK (PolyArylEtherKetone) tels que les polyéther cétones PEK, le poly(éther éther cétone) PEEK, le poly(éther cétone cétone) PEKK, le Poly(éther cétone éther cétone cétone) PEKEKK etc.

### Matériau fibreux :

Concernant les fibres de constitution du matériau fibreux, ce sont notamment des fibres d'origine minérale, organique ou végétale. Parmi les fibres d'origine minérale, on peut citer les fibres de carbone, les fibres de verre, les fibres de basalte, les fibres de silice, ou les fibres de carbure de silicium par exemple. Parmi les fibres d'origine organique, on peut citer les fibres à base de polymère thermoplastique ou thermodurcissable, telles que des fibres de polyamides aromatiques, des fibres d'aramide ou des fibres en polyoléfines par exemple. De préférence, elles sont à base de polymère thermoplastique et présentent une température de transition vitreuse Tg supérieure à la Tg du polymère ou mélange de polymère thermoplastique de constitution de la matrice d'imprégnation lorsque ce-dernier est amorphe, ou une température de fusion Tf supérieure à la Tf du polymère ou mélange de polymère thermoplastique de constitution de la matrice d'imprégnation lorsque ce-dernier est semi-cristallin. Ainsi, il n'y a aucun risque de fusion pour les fibres organiques de constitution du matériau fibreux. Parmi les fibres d'origine végétale, on peut citer les fibres naturelles à base de lin, de chanvre, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice de polymère thermoplastique.

Ces fibres de constitution peuvent être utilisées seules ou en mélanges. Ainsi, des fibres organiques peuvent être mélangées aux fibres minérales pour être imprégnée de polymère thermoplastique et former le matériau fibreux pré-imprégné.

Les fibres sont au choix monobrin, multibrin ou un mélange des deux, et peuvent avoir plusieurs grammages. Elles peuvent en outre présenter plusieurs géométries. Ainsi, elles peuvent se présenter sous forme de fibres courtes, qui composent alors les feutres ou les non tissés pouvant se présenter sous la forme de bandes, nappes, tresses, mèches ou morceaux, ou sous forme de fibres continues, qui composent les tissus 2D, les fibres ou mèches de fibres unidirectionnelles (UD) ou non tissées. Les fibres de constitution du matériau fibreux peuvent en outre se présenter sous forme d'un mélange de ces fibres de renfort de différentes géométries. De préférence, les fibres sont continues.

De préférence le matériau fibreux est constitué par des fibres continues de carbone, de verre ou de carbure de silicium ou leur mélange, en particulier des fibres de carbone. Il est utilisé sous forme d'une mèche ou de plusieurs mèches.

Selon le ratio volumique de polymère par rapport au matériau fibreux, il est possible de réaliser des matériaux pré-imprégnés dits « prêts à l'emploi » ou des matériaux pré-imprégnés dits « secs ».

Dans les matériaux pré-imprégnés dits « prêts à l'emploi », le polymère ou mélange de polymères thermoplastiques d'imprégnation est réparti uniformément et de manière homogène autour des fibres. Dans ce type de matériau, le polymère thermoplastique d'imprégnation doit être réparti de manière la plus homogène possible au sein des fibres afin d'obtenir un minimum de porosités, c'est à dire de vides entre les fibres. En effet, la présence de porosités dans ce type de matériaux peut agir comme des points de concentrations de contraintes, lors d'une mise sous contrainte mécanique de traction par exemple, et qui forment alors des points d'initiation de rupture du matériau fibreux pré-imprégné et le fragilisent mécaniquement. Une répartition homogène du polymère ou mélange de polymères améliore donc la tenue mécanique et l'homogénéité du matériau composite formé à partir de ces matériaux fibreux pré-imprégnés.

Ainsi, dans le cas de matériaux pré-imprégnés dits « prêts à l'emploi », le taux en volume du polymère ou mélange de polymères thermoplastiques par rapport au matériau fibreux varie de 40 à 250%, de préférence de 45 à 125 %, et plus préférentiellement de 45 à 80%.

Les matériaux fibreux pré-imprégnés dits « secs », quant à eux, comprennent des porosités entre les fibres et une plus faible quantité de polymère thermoplastique d'imprégnation qui recouvre les fibres en surface pour les maintenir ensemble. Ces matériaux pré-imprégnés « secs » sont adaptés à la fabrication de préformes pour matériaux composites. Ces préformes peuvent ensuite être utilisées pour faire de l'infusion de résine thermoplastique ou de résine thermodurcissable par exemple. Les porosités permettent dans ce cas de faciliter le transport ultérieur de la résine polymère infusée, au sein du matériau fibreux pré-imprégné, afin d'améliorer les propriétés finales du matériau composite et notamment sa cohésion mécanique. Dans ce cas, la présence du polymère thermoplastique d'imprégnation sur le matériau fibreux pré-imprégné dit « sec » permet de rendre compatible la résine d'infusion.

Ainsi, dans le cas de matériaux pré-imprégnés dits « secs », le taux en volume du polymère ou du mélange de polymères par rapport au matériau fibreux varie avantageusement de 0,2 et 15 %, de préférence entre 0,2 et 10% et plus préférentiellement de 0,2 et 5%. Dans ce cas on parle de voile polymère, de faible grammage, déposé sur le matériau fibreux pour maintenir les fibres ensembles.

Le procédé de fabrication d'un matériau fibreux selon l'invention comprend avantageusement deux étapes : une première étape d'imprégnation du matériau fibreux par le polymère thermoplastique, puis une étape de mise en forme du matériau fibreux pré-imprégné sous forme d'un ou plusieurs rubans unidirectionnels dont la largeur et l'épaisseur sont calibrées.

### Etape d'imprégnation :

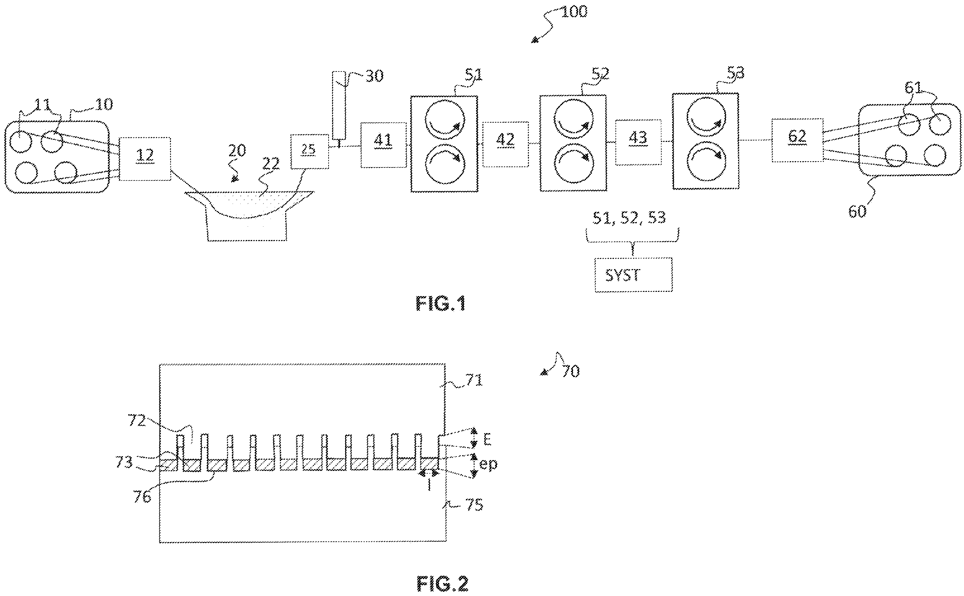

Le procédé de fabrication et l'unité de mise en œuvre de ce procédé sont décrit ci-après, en regard de la Figure 1 qui schématise, de manière très simplifiée, les éléments constitutifs de cette unité 100.

De manière avantageuse, l'étape d'imprégnation du matériau fibreux est réalisée par passage d'une ou plusieurs mèches dans un dispositif d'imprégnation en continu, comprenant une cuve 20 d'immersion contenant une dispersion aqueuse de de polymère(s) (par exemple poudre de polymère(s)) thermoplastique(s). Ladite dispersion a de préférence une taille moyenne de particules comprise entre 0,3 et 125 µm.

Chaque mèche à imprégner est alors déroulée d'un dispositif 10 à dévidoirs 11 sous la traction engendrée par des cylindres (non représentés). De préférence, le dispositif 10 comprend une pluralité de dévidoirs 11, chaque dévidoir permettant de dérouler une mèche à imprégner. Ainsi, il est possible d'imprégner plusieurs mèches de fibres simultanément. Chaque dévidoir 11 est pourvu d'un frein (non représenté) de manière à appliquer une tension sur chaque mèche de fibres. Dans ce cas, un module d'alignement 12 permet de disposer les mèches de fibres parallèlement les unes par rapport aux autres. De cette manière les mèches de fibres ne peuvent pas être en contact les unes avec les autres, ce qui permet d'éviter une dégradation mécanique des fibres notamment.

La mèche de fibres ou les mèches de fibres parallèles passent alors dans la cuve 20 d'immersion contenant la dispersion aqueuse de polymère. La poudre de polymère(s) est mélangée à l'eau pour former cette dispersion. La ou les mèches sont mises en circulation dans le bain formé par cette dispersion aqueuse 22. Le diamètre moyen des particules de polymère, y compris sous forme de dispersion de poudre, dans la dispersion aqueuse est de préférence inférieur à 125µm, afin de pouvoir pénétrer la ou les mèches de fibres. De préférence, le diamètre des particules est compris entre 0,3µm et 125 µm, de préférence entre 0,4 µm et 100µm. La ou les mèches pré-imprégnées ressortent ensuite de la cuve 20 et se dirigent vers un dispositif 25 de séchage afin d'évaporer l'eau. Ce dispositif de séchage 25, situé en sortie de la cuve 20 d'immersion, est avantageusement constitué par un dispositif de chauffage choisi parmi un dispositif à microondes ou par induction, en particulier lorsqu'il est couplé à la présence de charges carbonées, ou un système de chauffage infrarouge IR, ou par four à extraction de vapeur d'eau. De manière avantageuse, lorsque le polymère ou mélange de polymères comprend des charges carbonées, telles que du noir de carbone ou des nanocharges carbonées, de préférence choisies parmi des nanocharges carbonées, en particulier des graphènes et/ou des nanotubes de carbone et/ou des nanofibrilles de carbone ou leurs mélanges, l'effet de chauffage par induction ou par microondes est amplifié par la présence de ces charges qui conduisent alors la chaleur jusqu'au cœur du matériau.

De manière facultative, cette étape d'imprégnation peut être complétée par une étape de recouvrement de la mèche ou des mèches pré-imprégnées, juste en sortie de la cuve 20 d'imprégnation et du dispositif de séchage 25, et juste avant l'étape de mise en forme par calandrage. Pour cela, un dispositif de recouvrement 30, de préférence par extrusion en tête d'équerre permet de recouvrir la ou les mèches de fibres pré-imprégnées par un polymère thermoplastique fondu. Le polymère de recouvrement peut être identique ou différent de la poudre polymère en dispersion aqueuse. De préférence, il est de même nature. Un tel recouvrement permet de non seulement de compléter l'étape d'imprégnation des fibres pour obtenir un taux volumique final de polymère dans la gamme souhaitée, notamment pour l'obtention de matériaux fibreux dits « prêts à l'emploi » de bonne qualité, mais il permet en outre d'améliorer les performances du matériau composite obtenu.

### Etape de mise en forme

Dès sa (leur) sortie du dispositif 25 de séchage, la mèche (les mèches parallèles) pré-imprégnée(s), éventuellement recouverte(s) d'un polymère fondu, est (sont) mise(s) en forme sous forme de ruban unique unidirectionnel ou d'une pluralité de rubans unidirectionnels parallèles, au moyen d'un dispositif de calandrage en continu comprenant une ou plusieurs calandres chauffantes.

Jusqu'à présent le calandrage à chaud ne pouvait pas être envisagé pour une étape de mise en forme mais seulement pour une étape de finition car il ne permettait pas de chauffer à des températures suffisantes, en particulier lorsque le polymère, ou mélange de polymères thermoplastiques, d'imprégnation comprend des polymères à haute température de fusion.

De manière avantageuse, les calandres chauffantes du dispositif de calandrage sont couplées à des moyens de chauffage rapide qui permettent de chauffer le matériau non seulement en surface mais également à cœur. La contrainte mécanique des calandres couplée à ces moyens de chauffage rapide, permet d'éliminer la présence de porosités et de répartir de manière homogène le polymère, notamment lorsque le matériau fibreux est un matériau dit « prêt à l'emploi ».

De manière avantageuse ce calandrage à chaud permet non seulement de chauffer le polymère d'imprégnation pour qu'il pénètre, adhère et recouvre de manière uniforme les fibres, mais aussi de contrôler l'épaisseur et la largeur du ou des rubans de matériau fibreux pré-imprégné.

Pour pouvoir réaliser une pluralité de rubans parallèles unidirectionnels, c'est-à-dire autant de rubans que de mèches parallèles pré-imprégnées, passées dans le bain de dispersion aqueuse 22, les calandres chauffantes, référencées 51, 52, 53 sur le schéma de la Figure 1, comprennent avantageusement une pluralité de gorges de calandrage, en conformité avec le nombre de rubans. Ce nombre de gorges peut par exemple aller jusqu'à 200. Un système asservi SYST permet en outre de réguler la pression et/ou l'écartement E entre les rouleaux 71, 75 de la calandre 70, de manière à contrôler l'épaisseur ep des rubans. Une telle calandre 70 est schématisée sur la Figure 2 décrite ci-dessous.

Le dispositif de calandrage comprend au moins une calandre chauffante 51. De préférence, il comprend plusieurs calandres chauffantes 51, 52, 53 montées en série. Le fait d'avoir plusieurs calandres en série permet de tasser les porosités dans le matériau et de diminuer leur taux. Cette pluralité de calandres est donc importante lorsque l'on souhaite réaliser des matériaux fibreux dits « prêts à l'emploi ». En revanche, pour fabriquer des matériaux fibreux dits « secs » on peut se contenter d'un nombre de calandres inférieur, voire d'une seule calandre.

De manière avantageuse, chaque calandre du dispositif de calandrage dispose d'un système de chauffage intégré par induction ou par microondes, de préférence par microondes,, afin de chauffer le polymère ou mélange de polymères thermoplastiques. De manière avantageuse, lorsque le polymère ou mélange de polymères comprend des charges carbonées, telles que du noir de carbone ou des nanocharges carbonées, de préférence choisies parmi des nanocharges carbonées, en particulier des graphènes et/ou des nanotubes de carbone et/ou des nanofibrilles de carbone ou leurs mélanges, l'effet de chauffage par induction ou par microondes est amplifié par la présence de ces charges qui conduisent alors la chaleur jusqu'au cœur du matériau.

De manière avantageuse, chaque calandre 51, 52, 53 du dispositif est couplée à un dispositif de chauffage rapide 41, 42, 43, situé avant et/ou après chaque calandre, afin de transmettre rapidement de l'énergie thermique au matériau et de parfaire l'imprégnation des fibres par ledit polymère fondu. Le dispositif de chauffage rapide peut par exemple être choisi parmi les dispositifs suivants : un dispositif microondes ou d'induction, un dispositif infrarouge IR ou laser ou un autre dispositif permettant un contact direct à la source de chaleur tel qu'un dispositif à flamme. Un dispositif microondes ou par induction est très avantageux, en particulier lorsqu'il est couplé à la présence de nanocharges carbonées dans le polymère ou mélange de polymères puisque les nanocharges carbonées amplifient l'effet de chauffage et le transmettent jusqu'au cœur du matériau.

Selon une variante de réalisation, il est en outre possible de combiner plusieurs de ces dispositifs de chauffage.

Le procédé peut en outre comprendre une étape de chauffage des mèches des fibres, avant ladite imprégnation avec, comme moyen de chauffage préféré, le chauffage par micro-ondes comme pour le système de chauffage de ladite calandre chauffante.

De manière facultative, une étape ultérieure consiste à bobiner le ou les rubans pré-imprégnés et mis en forme. Pour cela, l'unité 100 de mise en œuvre du procédé comprend un dispositif d'embobinage 60 comportant autant de bobines 61 que de rubans, une bobine 61 étant affectée à chaque ruban. Un répartiteur 62 est en général prévu pour dévier les rubans pré-imprégnés vers leurs bobines 61 respectives, tout en évitant que les rubans se touchent afin d'éviter toute dégradation.

La Figure 2 schématise le détail des gorges 73 d'une calandre 70 vue en coupe. Une calandre 70 comprend un rouleau supérieur 71 et un rouleau inférieur 75. Un des rouleaux, par exemple le rouleau supérieur 71, comprend une partie crénelée 72, tandis que l'autre rouleau, c'est-à-dire le rouleau inférieur 75 dans l'exemple, comprend une partie rainurée 76, la forme des rainures étant complémentaire de la forme des parties en saillie 72 du rouleau supérieur. L'écartement E entre les rouleaux 71, 75 et/ou la pression exercée par les deux rouleaux l'un contre l'autre, permet de définir les dimensions des gorges 73, et notamment leur épaisseur ep et largeur I. Chaque gorge 73 est prévue pour y loger une mèche de fibres qui est alors pressée et chauffée entre les rouleaux. Les mèches se transforment alors en rubans unidirectionnels parallèles dont l'épaisseur et la largeur sont calibrées par les gorges 73 des calandres. Chaque calandre comprend avantageusement une pluralité de gorges dont le nombre peut aller jusqu'à 200, de manière à réaliser autant de rubans qu'il y a de gorges et de mèches pré-imprégnées. Le dispositif de calandrage comprend en outre un dispositif central, référencé SYST sur la Figure 1, piloté par un programme d'ordinateur prévu à cet effet, qui permet de réguler simultanément la pression et/ou l'écartement des rouleaux de calandrage de toutes les calandres 51, 52, 53 de l'unité 100.

Le ou les ruban(s) unidirectionnel(s) ainsi fabriqué(s) présente(nt) une largeur et une épaisseur adaptées pour une dépose par robot dans la fabrication de pièces en trois dimensions, sans besoin de refendage. La largeur du ou des ruban(s) est avantageusement comprise entre 5 et 100mm, de préférence entre 5 et 50mm, et de manière encore plus préférée entre 5 et 10mm.

Le procédé de fabrication d'un matériau fibreux pré-imprégné qui vient d'être décrit permet donc de réaliser des matériaux fibreux pré-imprégnés avec une grande productivité tout en permettant une imprégnation homogène des fibres et le contrôle et la reproductibilité de la porosité, et ainsi le contrôle et reproductibilité des performances de l'article composite final visé. L'imprégnation homogène autour des fibres et l'absence de porosités sont assurées par l'étape d'imprégnation, par immersion dans une dispersion aqueuse de polymère, couplée à l'utilisation d'un dispositif de mise en forme sous contrainte mécanique, lui-même couplé à des systèmes de chauffage rapide qui permettent de chauffer la matière en surface mais aussi à cœur. Les matériaux obtenus sont des produits semi-finis sous forme de rubans calibrés en épaisseur et en largeur et qui sont utilisés pour la fabrication de pièces de structure en trois dimensions, dans les secteurs des transports comme l'automobile, l'aéronautique, le nautique, ou le ferroviaire, des énergies renouvelables, en particulier éolienne, hydrolienne, les dispositifs de stockage d'énergie, les panneaux solaires ; des panneaux de protection thermique ; des sports et loisirs, de la santé et du médical ; des armes, de l'armement et de la balistique (pièces pour arme ou missile) ; de la sécurité, par un procédé pouvant être de la dépose de bandes assistée par une tête de robot par exemple, et connu sous le nom de procédé AFP (de l'acronyme anglais « Automatic Fiber Placement »).

Ce procédé permet donc de fabriquer en continu des rubans de dimensions calibrées et de grande longueur, si bien qu'il permet d'éviter des étapes de refendage et de raboutage coûteuses et préjudiciables à la qualité des pièces composites fabriquées ultérieurement. L'économie liée à la suppression de l'étape de refendage représente environ 30-40% du coût total de la production d'un ruban de matériau fibreux pré-imprégné.

L'association des dispositifs de chauffage rapide aux calandres chauffantes facilite la mise en forme des rubans aux dimensions souhaitées et permet d'augmenter de manière significative la cadence de production de ces rubans par rapport à des procédés conventionnels de mise en forme. De plus, cette association permet de densifier le matériau en supprimant totalement les porosités dans les matériaux fibreux dits « prêts à l'emploi ».

Les dispositifs de chauffage rapide permettent en outre l'utilisation de nombreux grades de polymères, même les plus visqueux, ce qui permet de couvrir toutes les gammes de résistance mécanique souhaitées.

Pour la fabrication spécifique de rubans de matériaux fibreux dits « secs », l'étape d'imprégnation, par immersion dans une dispersion aqueuse, permet d'obtenir un grammage de polymères réparti de manière homogène, avec un taux préférentiel de polymère déposé de l'ordre de 5 à 7 g/m.

Le procédé permet donc de réaliser des rubans calibrés de matériau fibreux pré-imprégné adaptés à la fabrication de pièces composites en trois dimensions, par dépose automatique desdits rubans au moyen d'un robot.

## Revendications

1. Procédé de fabrication d'un matériau fibreux pré-imprégné comprenant un matériau fibreux en fibres continues et une matrice en polymère thermoplastique, **caractérisé en ce que** ledit matériau fibreux pré-imprégné est réalisé en une pluralité de rubans parallèles unidirectionnels et **en ce que** ledit procédé comprend les étapes suivantes :
i) une étape d'imprégnation dudit matériau fibreux se présentant sous forme de plusieurs mèches parallèles, ladite étape d'imprégnation comprenant :
ia) l'immersion dudit matériau fibreux dans un bain contenant une dispersion aqueuse (22) dudit polymère thermoplastique, ladite immersion étant suivie par
ib) un séchage (25) dudit matériau fibreux, puis
ii) une étape de mise en forme desdites mèches parallèles dudit matériau fibreux imprégné selon l'étape i), par calandrage au moyen d'au moins une calandre (51, 52, 53) chauffante sous forme d'une pluralité de rubans parallèles unidirectionnels avec ladite calandre chauffante comportant une pluralité de gorges (73) de calandrage, de préférence jusqu'à 200 gorges de calandrage, en conformité avec le nombre desdits rubans et avec une pression et/ou un écartement entre les rouleaux de ladite calandre régulé par un système asservi.

2. Procédé selon la revendication 1, **caractérisé en ce qu'**il comprend en outre une étape iii) de bobinage desdits rubans sur plusieurs bobines (61), le nombre de bobines étant identique au nombre de rubans, une bobine étant affectée à chaque ruban.

3. Procédé selon la revendication 1 ou 2, **caractérisé en ce que** ladite étape d'imprégnation i) est complétée par une étape de recouvrement de ladite pluralité de mèches parallèles après les étapes d'immersion ia) et séchage ib), par un polymère thermoplastique fondu, pouvant être le même ou différent dudit polymère thermoplastique de ladite dispersion aqueuse, ladite étape de recouvrement étant réalisée avant ladite étape de calandrage ii), ledit polymère fondu étant de préférence de même nature que ledit polymère de ladite dispersion aqueuse, de préférence avec ledit recouvrement s'effectuant par extrusion (30) en tête d'équerre par rapport à ladite pluralité de mèches parallèles.

4. Procédé selon l'une des revendications 1 à 3, **caractérisé en ce que** ledit polymère de ladite dispersion aqueuse est un polymère thermoplastique ou un mélange de polymères thermoplastiques.

5. Procédé selon la revendication 4, **caractérisé en ce que** ledit polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges.

6. Procédé selon l'une des revendications 4 ou 5, **caractérisé en ce que** le polymère thermoplastique ou mélange de polymères thermoplastiques comprend en outre des polymères à cristaux liquides ou du poly(butylène téréphtalate) cyclisé, ou des mélanges en contenant, comme additif.

7. Procédé selon l'une des revendications 1 à 6, **caractérisé en ce que** ledit polymère, ou mélange de polymères thermoplastiques, est sélectionné parmi des polymères amorphes dont la température de transition vitreuse est telle que Tg≥ 80°C et/ou parmi des polymères semi-cristallins dont la température de fusion Tf est ≥ 150°C.

8. Procédé selon la revendication 7, **caractérisé en ce que** le polymère thermoplastique ou mélange de polymères thermoplastiques est sélectionné parmi : les polyaryl éther cétones (PAEK), en particulier le poly(éther éther cétone) (PEEK) ; les polyaryl éther cétone cétone (PAEKK), en particulier le poly(éther cétone cétone) (PEKK) ; les polyéther-imides (PEI) aromatiques ; les polyaryl sulfones, en particulier les polyphénylène sulfones (PPSU) ; les polyarylsulfures, en particulier les polyphénylène sulfures (PPS) ; les polyamides (PA), en particulier polyamides aromatiques éventuellement modifiées par unités urées ; les polyacrylates en particulier le polyméthacrylate de méthyle (PMMA) ; ou les polymères fluorés en particulier le polyfluorure de vinylidène (PVDF) ; et leurs mélanges.

9. Procédé selon l'une des revendications 1 à 8, **caractérisé en ce que** ledit matériau fibreux comprend des fibres continues sélectionnées parmi les fibres de carbone, de verre, de carbure de silicium, de basalte, de silice, les fibres naturelles en particulier de lin ou de chanvre, de sisal, de soie, ou cellulosiques en particulier de viscose, ou les fibres thermoplastiques de température de transition vitreuse Tg supérieure à la Tg dudit polymère ou dudit mélange de polymères lorsque ce-dernier est amorphe ou de température de fusion Tf supérieure à la Tf dudit polymère ou dudit mélange de polymères lorsque ce-dernier est semi-cristallin, ou un mélange de deux ou de plusieurs desdites fibres, de préférence un mélange de fibres de carbone, de verre ou de carbure de silicium, en particulier des fibres de carbone.

10. Procédé selon l'une des revendications 1 à 9, **caractérisé en ce que** le taux en volume dudit polymère ou mélange de polymères par rapport audit matériau fibreux varie de 40 à 250% de préférence de 45 à 125 % et plus préférentiellement de 45 à 80%.

11. Procédé selon l'une des revendications 1 à 9, **caractérisé en ce que** le taux en volume dudit polymère ou dudit mélange de polymères par rapport audit matériau fibreux varie de 0,2 et 15 %, de préférence entre 0,2 et 10% et plus préférentiellement de 0,2 et 5%.

12. Procédé selon l'une des revendications 1 à 11, **caractérisé en ce que** l'étape de calandrage ii) est réalisée au moyen d'une pluralité de calandres (51, 52, 53) chauffantes.

13. Procédé selon l'une des revendications 1 à 12, **caractérisé en ce que** ladite (lesdites) calandre(s) chauffante(s) de l'étape ii) comprend (comprennent) un système de chauffage intégré par induction ou par microondes, de préférence par microondes, couplé à la présence de charges carbonées dans ledit polymère thermoplastique ou mélange de polymères thermoplastiques.

14. Procédé selon l'une des revendications 1 à 13, **caractérisé en ce que** ladite (lesdites) calandre(s) chauffante(s) de l'étape ii) est (sont) couplée(s) à un dispositif de chauffage complémentaire rapide (41, 42, 43), situé avant et/ou après ladite (chaque) calandre (51, 52, 53), en particulier un dispositif de chauffage par microondes ou induction couplé à la présence de charges carbonées dans ledit polymère ou dans ledit mélange de polymères, ou un dispositif de chauffage infrarouge IR, ou Laser ou par contact direct avec une autre source de chaleur comme une flamme.

15. Utilisation du procédé tel que défini selon l'une des revendications 1 à 14, pour la fabrication de rubans calibrés adaptés à la fabrication de pièces composites en trois dimensions par dépose automatique desdits rubans au moyen d'un robot.

16. Unité (100) de mise en œuvre du procédé tel que défini selon l'une des revendications 1 à 14, **caractérisé en ce qu'**elle comprend :
a) un dispositif d'imprégnation en continu comprenant
a1) une cuve (20) d'immersion comprenant ladite dispersion aqueuse (22) dudit polymère, et
a2) un dispositif de séchage (25) de ladite pluralité de mèches parallèles,
b) un dispositif de calandrage en continu desdites mèches parallèles, avec mise en forme, sous forme de plusieurs rubans parallèles unidirectionnels, comprenant :
b1) au moins une calandre chauffante (51, 52, 53), en particulier plusieurs calandres chauffantes en série, ladite calandre portant plusieurs gorges (73) de calandrage, et de préférence ayant jusqu'à 200 gorges de calandrage,
b2) un système de régulation de la pression et/ou de l'écartement entre rouleaux (71, 75) de calandrage.

17. Unité selon la revendication 16, **caractérisée en ce qu'**elle comprend en outre un dispositif (60) d'embobinage des rubans de matériau fibreux pré-imprégné, comportant un nombre de bobines (61) identique au nombre de rubans, une bobine étant affectée à chaque ruban.

18. Unité selon la revendication 16 ou 17, **caractérisée en ce que** ledit dispositif d'imprégnation a) comprend en plus et à la suite dudit dispositif de cuve (20) d'immersion a1), et dudit dispositif de séchage (25) a2), un dispositif a3) de recouvrement de ladite pluralité de mèches parallèles imprégnées et séchées, par un polymère fondu, de préférence ledit dispositif de recouvrement a3) comprenant un dispositif (30) d'extrusion en tête d'équerre par rapport auxdites mèches parallèles.

19. Unité selon l'une des revendications 16 à 18, **caractérisée en ce que** ladite (lesdites) calandre(s) chauffante(s) (51, 52, 53) comprend (comprennent) un système de chauffage intégré par induction.

20. Unité selon l'une des revendications 16 à 19, **caractérisée en ce que** ladite (lesdites) calandre(s) chauffante(s) (51, 52, 53) est (sont) couplée(s) à un dispositif complémentaire de chauffage rapide (41, 42, 43), situé avant et/ou après ladite (chaque) calandre, ledit système de chauffage étant choisi parmi un dispositif à microondes ou d'induction en particulier lorsqu'il est couplé à la présence de charges carbonées, ou un système de chauffage IR, Laser ou un autre dispositif permettant un contact direct à la source de chaleur, tel qu'un dispositif à flamme.

21. Unité selon l'une des revendications 16 à 20, **caractérisée en ce que** ledit dispositif de séchage (25), situé en sortie de ladite cuve d'immersion (20), est un dispositif de chauffage choisi parmi un dispositif à microondes ou par induction, en particulier lorsqu'il est couplé à la présence de charges carbonées, ou un système de chauffage infrarouge IR, ou par four à extraction de vapeur d'eau.

## Patentansprüche

1. Verfahren zur Herstellung eines vorimprägnierten Fasermaterials, umfassend ein Fasermaterial aus kontinuierlichen Fasern und eine Matrix aus thermoplastischem Polymer, **dadurch gekennzeichnet, dass** das vorimprägnierte Fasermaterial aus einer Vielzahl eindirektionaler paralleler Bänder realisiert ist und dass das Verfahren die folgenden Schritte umfasst:
i) einen Schritt des Imprägnierens des Fasermaterials, das in Form mehrerer paralleler Strähnen vorliegt, wobei der Schritt des Imprägnierens umfasst:
ia) das Eintauchen des Fasermaterials in ein Bad, das eine wässrige Dispersion (22) des thermoplastischen Polymers enthält, wobei dem Eintauchen folgt
ib) ein Trocknen (25) des Fasermaterials, dann
ii) ein Schritt des Formgebens der parallelen Strähnen des gemäß Schritt i) imprägnierten Fasermaterials durch Kalandern mittels mindestens eines Heizkalanders (51, 52, 53) in Form einer Vielzahl eindirektionaler paralleler Bänder mit dem Heizkalander, aufweisend eine Vielzahl von Kalandernuten (73), vorzugsweise bis 200 Kalandernuten, übereinstimmend mit der Anzahl der Bänder und mit einem Druck und/oder einem Abstand zwischen den Walzen des von einem Steuerungssystem eingestellten Kalanders.

2. Verfahren nach Anspruch 1, **dadurch gekennzeichnet, dass** es ferner einen Schritt iii) des Wickelns der Bänder auf mehrere Spulen (61) umfasst, wobei die Anzahl der Spulen mit der Anzahl der Bänder identisch ist, wobei eine Spule jedem Band zugeordnet ist.

3. Verfahren nach Anspruch 1 oder 2, **dadurch gekennzeichnet, dass** der Schritt des Imprägnierens i) von einem Schritt des Beschichtens der Vielzahl paralleler Strähnen nach den Schritten des Eintauchens ia) und Trocknens ib) durch ein geschmolzenes thermoplastisches Polymer ergänzt wird, welches dasselbe wie das oder unterschiedlich von dem thermoplastischen Polymer der wässrigen Dispersion sein kann, wobei der Schritt des Beschichtens vor dem Schritt des Kalanderns ii) durchgeführt wird, wobei das geschmolzene Polymer vorzugsweise derselben Art wie das Polymer der wässrigen Dispersion ist, vorzugsweise mit dem Beschichten, durchgeführt durch Extrusion (30) mit Querspritzkopf in Bezug auf die Vielzahl paralleler Strähnen.

4. Verfahren nach einem der Ansprüche 1 bis 3, **dadurch gekennzeichnet, dass** das Polymer der wässrigen Dispersion ein thermoplastisches Polymer oder ein Gemisch thermoplastischer Polymere ist.

5. Verfahren nach Anspruch 4, **dadurch gekennzeichnet, dass** das thermoplastische Polymer oder Gemisch thermoplastischer Polymere ferner kohlenstoffhaltige Füllmaterialien, vor allem Carbonschwarz oder kohlenstoffhaltige Nano-Füllmaterialien, vorzugsweise ausgewählt aus kohlenstoffhaltigen Nano-Füllmaterialien, vor allem aus Graphenen und/oder Carbon-Nanoröhrchen und/oder Carbon-Nanofibrillen oder deren Gemischen, umfasst.

6. Verfahren nach einem der Ansprüche 4 oder 5, **dadurch gekennzeichnet, dass** das thermoplastische Polymer oder Gemisch thermoplastischer Polymere ferner Flüssigkeitskristallpolymere oder cyclisiertes Poly(butylenterephtalat) oder Gemische, die davon enthalten, als Zusatzstoff umfasst.

7. Verfahren nach einem der Ansprüche 1 bis 6, **dadurch gekennzeichnet, dass** das Polymer oder Gemisch thermoplastischer Polymere aus amorphen Polymeren ausgewählt ist, deren Glasübergangstemperatur derart ist, dass Tg ≥ 80°C ist und/oder aus halbkristallinen Polymeren, deren Schmelztemperatur Tf ≥ 150°C beträgt.

8. Verfahren nach Anspruch 7, **dadurch gekennzeichnet, dass** das thermoplastische Polymer oder Gemisch thermoplastischer Polymere ausgewählt ist aus: den Polyaryletherketonen (PAEK), vor allem dem Poly(etheretherketon) (PEEK); den Polyaryletherketonketon (PAEKK), vor allem dem Poly(etherketonketon) (PEKK); den aromatischen Polyetherimiden (PEI); den Polyarylsulfonen, vor allem den Polyphenylensulfonen (PPSU); den Polyarylsulfiden, vor allem den Polyphenylensulfiden (PPS); den Polyamiden (PA), vor allem aromatischen Polyamiden, eventuell modifiziert durch Harnstoffeinheiten; den Polyacrylaten, vor allem dem Polymethylmethacrylat (PMMA); oder den fluorierten Polymeren, vor allem dem Polyvinylidenfluorid (PVDF); und deren Gemischen.

9. Verfahren nach einem der Ansprüche 1 bis 8, **dadurch gekennzeichnet, dass** das Fasermaterial kontinuierliche Fasern umfasst, die aus den Carbon-, Glas-, Siliciumcarbid-, Basalt-, Siliciumdioxidfasern, den Naturfasern, vor allem Leinen oder Hanf, Sisal, Seide oder Zellulose, vor allem Viskose, oder den thermoplastischen Fasern mit Glasübergangstemperatur Tg über der Tg des Polymers oder des Polymergemischs, wenn dieses amorph ist, oder mit Schmelztemperatur Tf über der Tf des Polymers oder des Polymergemischs, wenn dieses halbkristallin ist, oder einem Gemisch aus zwei oder mehreren der Fasern, vorzugsweise einem Gemisch aus Carbon-, Glas- oder Siliciumcarbidfasern, vor allem Carbonfasern, ausgewählt ist.

10. Verfahren nach einem der Ansprüche 1 bis 9, **dadurch gekennzeichnet, dass** der Volumengehalt des Polymers oder Polymergemischs in Bezug auf das Fasermaterial von 40 bis 250%, vorzugsweise von 45 bis 125% und vorzugsweiser von 45 bis 80% schwankt.

11. Verfahren nach einem der Ansprüche 1 bis 9, **dadurch gekennzeichnet, dass** der Volumengehalt des Polymers oder des Polymergemischs in Bezug auf das Fasermaterial von 0,2 und 15%, vorzugsweise zwischen 0,2 und 10% und vorzugsweiser von 0,2 und 5% schwankt.

12. Verfahren nach einem der Ansprüche 1 bis 11, **dadurch gekennzeichnet, dass** der Schritt des Kalanderns ii) mittels einer Vielzahl von Heizkalandern (51, 52, 53) durchgeführt wird.

13. Verfahren nach einem der Ansprüche 1 bis 12, **dadurch gekennzeichnet, dass** der (die) Heizkalander von Schritt ii) ein integriertes Heizsystem durch Induktion oder durch Mikrowellen, vorzugsweise durch Mikrowellen, umfasst (umfassen), gekoppelt an die Anwesenheit kohlenstoffhaltiger Füllmaterialien in dem thermoplastischen Polymer oder Gemisch thermoplastischer Polymere.

14. Verfahren nach einem der Ansprüche 1 bis 13, **dadurch gekennzeichnet, dass** der (die) Heizkalander von Schritt ii) an eine komplementäre Schnellheizvorrichtung (41, 42, 43) gekoppelt ist (sind), die sich vor und/oder nach dem (jedem) Kalander (51, 52, 53) befindet, vor allem eine Heizvorrichtung durch Mikrowellen oder Induktion, gekoppelt an die Anwesenheit kohlenstoffhaltiger Füllmaterialien in dem Polymer oder in dem Polymergemisch, oder eine Infrarot-Heizvorrichtung IR, oder Laser oder durch Direktkontakt mit einer anderen Wärmequelle wie eine Flamme.

15. Verwendung des Verfahrens nach einem der Ansprüche 1 bis 14 für die Herstellung von kalibrierten Bändern, die für die Herstellung von dreidimensionalen Kompositteilen durch automatisches Ablegen der Bänder mittels eines Roboters geeignet sind.

16. Einheit (100) für die Durchführung des Verfahrens nach einem der Ansprüche 1 bis 14, **dadurch gekennzeichnet, dass** sie umfasst:
a) eine kontinuierliche Imprägniervorrichtung, umfassend
a1) einen Eintauchbehälter (20), umfassend die wässrige Dispersion (22) des Polymers, und
a2) eine Trocknungsvorrichtung (25) der Vielzahl paralleler Strähnen,
b) eine kontinuierliche Kalandervorrichtung der parallelen Strähnen mit Formgebung in Form mehrerer eindirektionaler paralleler Bänder, umfassend:
b1) mindestens einen Heizkalander (51, 52, 53), vor allem mehrere Heizkalander in Reihe, wobei der Kalander mehrere Kalandernuten (73) trägt und vorzugsweise bis zu 200 Kalandernuten hat,
b2) ein Regelsystem des Drucks und/oder des Abstands zwischen den Kalanderwalzen (71, 75).

17. Einheit nach Anspruch 16, **dadurch gekennzeichnet, dass** sie ferner eine Wickelvorrichtung (60) der Bänder vorimprägnierten Fasermaterials umfasst, aufweisend eine Anzahl von Spulen (61), die mit der Anzahl der Bänder identisch ist, wobei eine Spule jedem Band zugeordnet ist.

18. Einheit nach Anspruch 16 oder 17, **dadurch gekennzeichnet, dass** die Imprägniervorrichtung a) zusätzlich und nach der Eintauchbehältervorrichtung (20) a1) und der Trocknungsvorrichtung (25) a2) eine Beschichtungsvorrichtung a3) der Vielzahl imprägnierter und getrockneter paralleler Strähnen mit einem geschmolzenen Polymer umfasst, wobei die Beschichtungsvorrichtung a3) vorzugsweise eine Extrusionsvorrichtung (30) mit Querspritzkopf in Bezug auf die parallelen Strähnen umfasst.

19. Einheit nach einem der Ansprüche 16 bis 18, **dadurch gekennzeichnet, dass** der (die) Heizkalander (51, 52, 53) ein integriertes Heizsystem durch Induktion umfasst (umfassen).

20. Einheit nach einem der Ansprüche 16 bis 19, **dadurch gekennzeichnet, dass** der (die) Heizkalander (51, 52, 53) an eine komplementäre Schnellheizvorrichtung (41, 42, 43) gekoppelt ist (sind), die sich vor und/oder nach dem (jedem) Kalander befindet, wobei das Heizsystem aus einer Mikrowellen- oder Induktionsvorrichtung ausgewählt ist, vor allem, wenn es an die Anwesenheit kohlenstoffhaltiger Füllmaterialien gekoppelt ist, oder einer Infrarotvorrichtung IR, Laser oder einer anderen Vorrichtung, die einen Direktkontakt mit der Wärmequelle wie eine Flamme erlaubt.

21. Einheit nach einem der Ansprüche 16 bis 20, **dadurch gekennzeichnet, dass** die Trocknungsvorrichtung (25) am Ausgang des Eintauchbehälters (20) eine Heizvorrichtung ist, ausgewählt aus einer Mikrowellen- oder Induktionsvorrichtung, vor allem, wenn sie an die Anwesenheit kohlenstoffhaltiger Füllmaterialien gekoppelt ist, oder einem Infrarot-Heizsystem IR oder durch Ofen mit Wasserdampfextraktion.

## Claims

1. Process for manufacturing a prepreg fibrous material comprising a fibrous material of continuous fibers and a thermoplastic polymer matrix, **characterized in that** said prepreg fibrous material is made of a plurality of unidirectional parallel tapes and **in that** said process comprises the following steps:
i) a step of impregnating said fibrous material in the form of several parallel rovings, said impregnation step comprising:
ia) immersing said fibrous material in a bath containing an aqueous dispersion (22) of said thermoplastic polymer, said immersion being followed by
ib) drying (25) said fibrous material, then
ii) a step of shaping said parallel rovings of said fibrous material impregnated according to step i), by calendering by means of at least one heating calender (51, 52, 53) in the form of a plurality of unidirectional parallel tapes with said heating calender comprising a plurality of calendering grooves (73), preferably up to 200 calendering grooves, in accordance with the number of said tapes and with a pressure and/or a spacing between the rolls of said calender regulated by a servo system.

2. Process according to claim 1, **characterized in that** it further comprises a step iii) of winding said tapes on a plurality of reels (61), the number of reels being the same as the number of tapes, one reel being assigned to each tape.

3. Process according to claim 1 or 2, **characterized in that** said impregnation step i) is completed by a step of coating said plurality of parallel rovings after the immersion ia) and drying ib) steps with a molten thermoplastic polymer, which may be the same as or different from said thermoplastic polymer of said aqueous dispersion, said coating step being carried out before said calendering step ii), said molten polymer being preferably of the same nature as said polymer of said aqueous dispersion, preferably with said coating being carried out by crosshead extrusion (30) with respect to said plurality of parallel rovings.

4. Process according to one of claims 1 to 3, **characterized in that** said polymer of said aqueous dispersion is a thermoplastic polymer or a mixture of thermoplastic polymers.

5. Process according to claim 4, **characterized in that** said thermoplastic polymer or mixture of thermoplastic polymers further comprises carbon fillers, in particular carbon black or carbon nanofillers, preferably selected from carbon nanofillers, in particular graphenes and/or carbon nanotubes and/or carbon nanofibers or mixtures thereof.

6. Process according to claim 4 or claim 5, **characterized in that** the thermoplastic polymer or mixture of thermoplastic polymers further comprises liquid crystal polymers or cyclic poly(butylene terephthalate), or mixtures containing same, as additive.

7. Process according to one of claims 1 to 6, **characterized in that** said polymer, or mixture of thermoplastic polymers, is selected from amorphous polymers whose glass transition temperature is such that Tg ≥ 80°C and/or from semicrystalline polymers whose melting temperature Tf is ≥ 150°C.

8. Process according to claim 7, **characterized in that** the thermoplastic polymer or mixture of thermoplastic polymers is selected from: polyaryl ether ketones (PAEK), in particular poly(ether ketone) (PEEK); polyaryl ether ketone (PAEKK), in particular poly(ether ketone ketone) (PEKK); aromatic polyether imides (PEI); polyaryl sulfones, in particular polyphenylene sulfones (PPSU); polyarylsulfides, in particular polyphenylene sulfides (PPS); polyamides (PA), in particular aromatic polyamides optionally modified by urea units; polyacrylates, in particular polymethyl methacrylate (PMMA); or fluorinated polymers, in particular polyvinylidene fluoride (PVDF); and mixtures thereof.

9. Process according to one of claims 1 to 8, **characterized in that** said fibrous material comprises continuous fibers selected from carbon, glass, silicon carbide, basalt, silica, natural fibers especially flax or hemp, sisal, silk, or cellulosic fibers especially viscose, or thermoplastic fibers with a glass transition temperature Tg higher than the Tg of said polymer or said mixture of polymers when the latter is amorphous or with a melting temperature Tf higher than the Tf of said polymer or said polymer mixture when the latter is semicrystalline, or a mixture of two or more of said fibers, preferably a mixture of carbon, glass or silicon carbide fibers, in particular carbon fibers.

10. Process according to one of claims 1 to 9, **characterized in that** the volume percentage of said polymer or mixture of polymers with respect to said fibrous material varies from 40 to 250%, preferably from 45 to 125%, and more preferably from 45 to 80%.

11. Process according to one of claims 1 to 9, **characterized in that** the volume percentage of said polymer or said polymer mixture with respect to said fibrous material varies from 0.2 to 15%, preferably from 0.2 to 10%, and more preferentially from 0.2 to 5%.

12. Process according to one of claims 1 to 11, **characterized in that** the calendering step ii) is carried out by means of a plurality of heating calenders (51, 52, 53).

13. Process according to one of claims 1 to 12, **characterized in that** said heating calender (s) of step ii) comprise(s) an integrated induction or microwave, preferably microwave, heating system coupled with the presence of carbon fillers in said thermoplastic polymer or mixture of thermoplastic polymers.

14. Process according to one of claims 1 to 13, **characterized in that** said heating calender (s) of step ii) is (are) coupled to a complementary rapid heating device (41, 42, 43), located before and/or after said (each) calender (51, 52, 53), in particular a microwave or induction heating device coupled with the presence of carbon fillers in said polymer or in said mixture of polymers, or an infrared (IR) or laser heating device, or by direct contact with another heat source such as a flame.

15. Use of the process as defined according to one of claims 1 to 14, for the manufacture of calibrated tapes suitable for the manufacture of three-dimensional composite parts by automatic application of said tapes by means of a robot.

16. Unit (100) for carrying out the process as defined according to one of claims 1 to 14, **characterized in that** it comprises:
a) a continuous impregnation device comprising
a1) an immersion tank (20) comprising said aqueous dispersion (22) of said polymer, and
a2) a device (25) for drying said plurality of parallel rovings,
b) a device for continuously calendering said parallel rovings, with shaping, in the form of several unidirectional parallel tapes, comprising:
b1) at least one heating calender (51, 52, 53), in particular several heating calenders in series, said calender carrying several calendering grooves (73), and preferably having up to 200 calendering grooves,
b2) a system for regulating the pressure and/or spacing between calender rolls (71, 75).

17. Unit according to claim 16, **characterized in that** it further comprises a device (60) for winding tapes of prepreg fibrous material, having a number of reels (61) identical to the number of tapes, one reel being assigned to each tape.

18. Unit according to claim 16 or 17, **characterized in that** said impregnation device a) comprises in addition to and following said immersion tank device (20) a1) and said drying device (25) a2), a device a3) for coating said plurality of impregnated and dried parallel rovings with a molten polymer, preferably said coating device a3) comprising a crosshead extrusion device (30) with respect to said parallel rovings.

19. Unit according to one of claims 16 to 18, **characterized in that** said heating calender (s) (51, 52, 53) comprise (s) an integrated induction heating system.

20. Unit according to one of claims 16 to 19, **characterized in that** said heating calender(s) (51, 52, 53) is (are) coupled to a complementary rapid heating device (41, 42, 43), located before and/or after said (each) calender, said heating system being selected from a microwave or induction device in particular when coupled with the presence of carbon fillers, or an IR, laser or another device allowing direct contact with the heat source, such as a flame device.

21. Unit according to one of claims 16 to 20, **characterized in that** said drying device (25), located at the outlet of said immersion tank (20), is a heating device selected from a microwave or induction device, in particular when coupled with the presence of carbon fillers, or an infrared (IR) heating system, or by water vapor extraction furnace.
